# FASCICULE DE BREVET EUROPEEN

(11) **EP 0 238 386 B1**
(45) Date de publication et mention de la délivrance du brevet: **25.08.1993**
(21) Numéro de dépôt: 87400446.8
(22) Date de dépôt: 02.03.1987
(51) Int. Cl.: A01F 15/00

(54) **Ramasseuse-enrouleuse de balles cylindriques**
Rundballenpresse
Round bale baler

(30) Priorité: 06.03.1986 FR 8603174
(43) Date de publication de la demande: 23.09.1987
(73) Titulaire: NEW HOLLAND BELGIUM N.V., B-8210 Zedelgem (BE)
(72) Inventeur: Renaud Loîc, F-85220 Coex (FR)
(74) Mandataire: Clanet, Denis

(56) Documents cités:
- EP-A- 0 060 956
- EP-A- 0 130 258
- GB-A- 2 044 170
- US-A- 4 517 795

## Description

La présente invention a pour objet une ramasseuse-enrouleuse de balles cylindriques également connue sous la désignation presse à balles cylindriques du type comportant sur un châssis de support porté par une paire de roues, une chambre de pressage délimitée par un caisson avant fixé rigidement sur le châssis et par une porte à caisson arrière montée à pivotement sur le caisson avant fixe de façon à pouvoir être basculée vers le haut et libérer la sortie d'une balle. A la partie inférieure de la chambre de pressage est prévue une ouverture d'accès s'étendant sur toute la largeur de la ramasseuse-enrouleuse parallèlement à l'axe de la balle cylindrique et en-dessous de cette ouverture accès est disposé un dispositif d'alimentation dénommé "pick up" qui ramasse les produits fibreux formant andains ou fourrage et les renvoie à l'intérieur de la chambre de pressage. A l'intérieur de la chambre de pressage sont prévus plusieurs courroies sans fin juxtaposées qui passent par dessus plusieurs rouleaux de renvoi dont certains sont disposés à poste fixe à la périphérie de la chambre et dont les autres sont montés sur des balanciers et font suivre auxdites courroies la forme grandissante de la balle en maintenant tendues les courroies passant sur la ou les parties de plus grand diamètre de la balle, un rouleau d'amorçage étant disposé au-dessus et à une certaine distance du dispositif d'alimentation et délimitant le bord frontal de l'ouverture d'accès.

La ramasseuse-enrouleuse comprend généralement aussi un dispositif de ficelage par exemple du type comportant un boîtier de commande disposé à la partie inférieure du caisson fixe de ladite ramasseuse-enrouleuse en avant de l'ouverture d'accès à la chambre de pressage de celle-ci, de façon à s'étendre parallèlement à et sur toute la longueur transversale de cette ouverture, au moins un distributeur guide-ficelle dont l'extrémité de distribution se déplace parallèlement à l'axe de la balle et aux bords longitudinaux de l'ouverture d'accès, des moyens d'entrainement rectiligne du distributeur guide-ficelle, un dispositif d'alimentation de ficelle à partir d'une bobine disposée dans un coffret du caisson fixe et muni d'un certain nombre d'éléments de guidage et de renvoi, ainsi qu'un mécanisme de coupe de ficelle en fin d'opération de liage d'une balle cylindrique.

Dans les ramasseuses-enrouleuses de ce type décrit d'une façon plus détaillée par exemple par le brevet français 2 410 431, les différentes courroies sans fin juxtaposées et servant à la formation de balles rondes à partir d'un fourrage qui peut être de toute nature, sont tendues par un dispositif de tension commun qui agit de la même façon sur chacune des courroies. Il s'ensuit qu'à certains endroits de la chambre de pressage insuffisamment alimentés par du fourrage, notamment aux extrémités de la balle, là où les courroies correspondantes ne sont pas correctement tendues, la densité de la balle est inférieure à celle des endroits normalement alimentés. De ce fait, on peut obtenir des balles de densité hétérogène et de forme différente de celle d'un cylindre. En outre, une courroie non tendue a toujours tendance à vriller ou à dévier latéralement et à frotter contre le bord d'une courroie voisine, ce qui peut entraîner une usure plus rapide que la normale.

Les brevets GB 2 044 170 et US 4 517 795 décrivent des dispositifs de calibrage de balles comportant des dispositifs indicateurs associés par paires pour contrôler les différences de diamètres en deux emplacements de la périphérie de la balle axialement écartés. Le rétablissement de la tension de ces courroies dépend uniquement de la dextérité du conducteur à manoeuvrer sa machine pour compléter l'alimentation dans les zones où se produit le relâchement des courroies. Pendant un laps de temps plus ou moins long cependant, le relâchement de la tension des courroies entraîne des défauts d'homogénéité de la balle de fourrage, des dérapages latéraux et des vrillages des courroies.

La présente invention a pour but de proposer des moyens permettant de supprimer, ou tout au moins d'atténuer, ces inconvénients et de réaliser des balles sensiblement cylindriques d'une densité homogène.

Dans une ramasseuse-enrouleuse du type initialement mentionné, ce but est atteint du fait qu'au moins une courroie est associée à un dispositif individuel de rétablissement de tension de courroie qui coopère avec le dispositif indicateur de position, le dispositif individuel de rétablissement de tension comprenant un rouleau de pression s'étendant sur sensiblement toute la largeur de la courroie considérée, l'organe de commande du dispositif indicateur étant actionné par un élément suiveur du rouleau conjugués entre eux de façon à commander l'activation du voyant pour n'importe quelle position de cet élément suiveur à partir d'une position limite pour laquelle l'alimentation en fourrage de la chambre de pressage dans la section correspondant à la courroie tendue par le rouleau devient insuffisante.

Grâce à l'association d'une courroie individuelle et d'un dispositif individuel de rétablissement de tension de courroie et d'un dispositif indicateur de position, on peut rattraper le mou de la courroie située du côté moins ou non alimenté de la chambre de pressage et le conducteur averti peut alors remédier à l'alimentation insuffisante en plaçant la zone mal alimentée de la ramasseuse-enrouleuse en face d'une zone de fourrage bien fourni.

Selon un mode de réalisation avantageux, on associe à chacune des courroies extrêmes latérales un dispositif individuel de rétablissement de tension de courroie et un dispositif indicateur de position. De cette façon, le conducteur peut contrôler au moins les zones extrêmes de la balle de fourrage et corriger leur alimentation en fourrage, zones extrêmes qui, comme on le sait, sont les plus délicates à réaliser de façon homogène.

Pour connaître au moins approximativement l'état de surface de la balle, il est avantageux d'associer à chacune des courroies de la ramasseuse-enrouleuse un dispositif individuel de rétablissement de tension de courroie et un dispositif indicateur de position et de disposer les voyants des dispositifs indicateurs en ligne, par exemple horizontale, sur le tableau de bord du conducteur de la ramasseuse-enrouleuse.

D'autres avantages et caractéristiques de l'invention ressortiront de la description suivante d'un mode de réalisation, de l'invention, description faite en référence aux dessins annexés dans lesquels :
- La figure 1 représente une vue schématique latérale en élévation d'une ramasseuse-enrouleuse munie du dispositif individuel de rétablissement de tension de courroie ;
- la figure 2 est une vue en perspective et partiellement éclatée d'une partie de la ramasseuse-enrouleuse munie du dispositif individuel de rétablissement de tension de courroie ; et

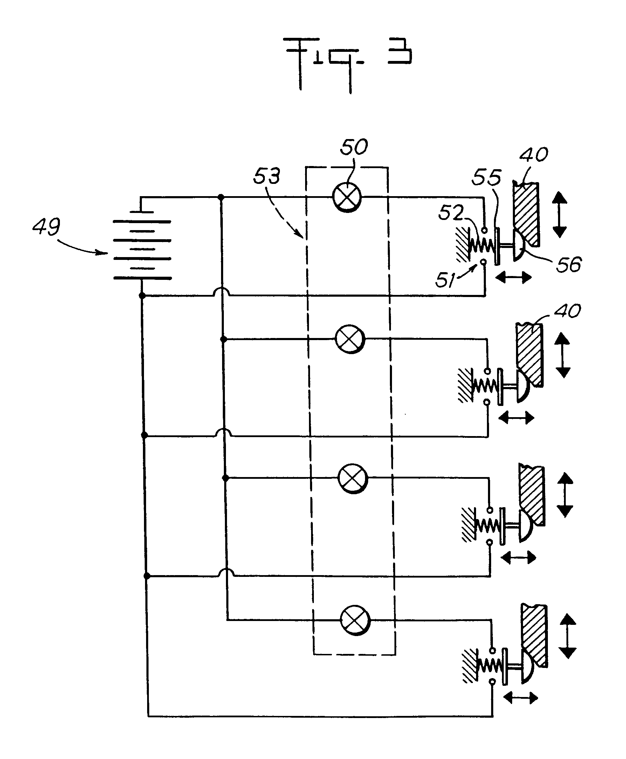

- la figure 3 est un schéma électrique du dispositif indicateur de position.

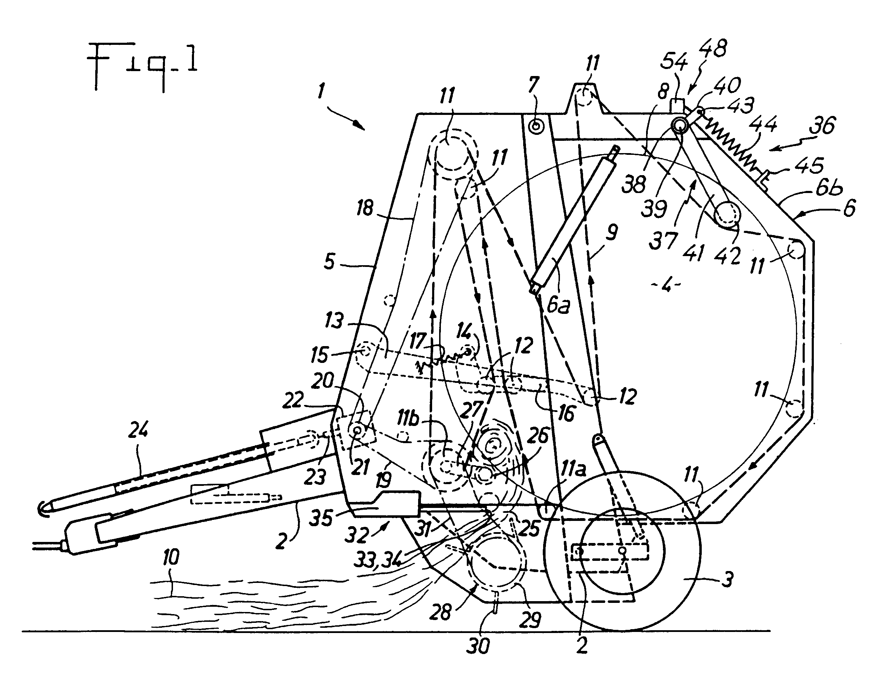

Tel qu'on peut le voir sur la figure 1, la ramasseuse-enrouleuse ou presse à balles cylindriques 1 comporte sur un châssis de support 2 porté par une paire de roues 3, une chambre de pressage 4 délimitée par un caisson avant 5 monté rigidement sur le châssis 2 et par une porte à caisson arrière 6 montée à pivotement par l'intermédiaire d'un axe 7 sur la partie arrière supérieure du caisson avant fixe 5 de façon à pouvoir être basculée vers le haut sous l'action de vérins d'ouverture 6a et à permettre la sortie d'une balle ficelée 8 hors de ladite chambre de pressage 4, les extrémités des vérins d'ouverture 6a étant articulées, d'une part, au caisson avant 5 et, d'autre part, à la porte à caisson arrière 6.

Une série de courroies sans fin 9 juxtaposées et servant à entrainer et à enrouler en continu des couches d'andain 10 des produits de récolte fibreux ou de fourrage pour former une balle cylindrique 8 passent autour de plusieurs rouleaux de guidage ou de renvoi fixes 11 et d'une série de rouleaux mobiles en position 12 et montés sur des balanciers 13, 14 articulés eux-mêmes soit (en 15) sur la partie frontale du caisson avant, soit (en 16) sur le premier balancier 13, et rappelés par un ressort 17 contre le premier balancier 13, ces rouleaux mobiles en position 12 servant à la mise et au maintien sous tension de l'ensemble des courroies 9 qui forment une sorte de nappe ou de tapis sans fin.

Les deux rouleaux fixes avant 11 servent en même temps à la commande des courroies 9 et sont entrainés en rotation par deux transmissions à chaîne 18, 19 en prise sur une roue dentée 20 d'un arbre de sortie 21 d'une boîte de transmission 22 dont l'arbre d'entrée 23 est raccordé par l'intermédiaire d'un arbre téléscopique à cardans 24 à l'arbre de sortie non représenté d'un tracteur.

A la partie inférieure de la chambre de pressage 4 est prévue une ouverture d'accès 25 délimitée par un rouleau inférieur fixe 11a et un rouleau d'amorçage 26 disposé à proximité du rouleau de commande inférieur 11b et entrainé en rotation à partir de celui-ci par l'intermédiaire d'une autre transmission à chaîne 27. Bien entendu, les différentes transmissions sont disposées de façon à ne pas gêner l'amenée des andains 10 à l'ouverture d'accès 25 qui s'étend sur toute la largeur de la ramasseuse-enrouleuse 1 parallèlement à l'axe de la balle 8 et à tous les rouleaux 11 et 12.

En dessous de l'ouverture d'accès est prévu un dispositif d'alimentation 28 de structure habituelle et connu sous la dénomination de "pick-up". Ce dispositif d'alimentation 28 comprend un cylindre mobile en rotation 29 monté sur la partie inférieure du caisson avant 5 et muni d'une série de doigts ramasseurs 30, une transmission à courroie 31 faisant tourner ledit cylindre 29 en synchronisme avec le rouleau inférieur de commande 11b.

Le dispositif de ficelage 32 comprend deux distributeurs guide-ficelle 33, 34 et est disposé à la partie inférieure du caisson avant 5 de telle sorte que l'extrémité arrière libre desdits distributeurs 33, 34 se situe au-dessus du dispositif d'alimentation 28, en-dessous du rouleau d'amorçage 26 et en avant de l'ouverture d'accès 25. Le dispositif de ficelage 32 comprend un boîtier de commande 35 disposé transversalement à la partie inférieure du caisson fixe 5 et parallèlement et en avant de l'ouverture d'accès 25 et s'étendant sur toute la largeur de la ramasseuse-enrouleuse 1.

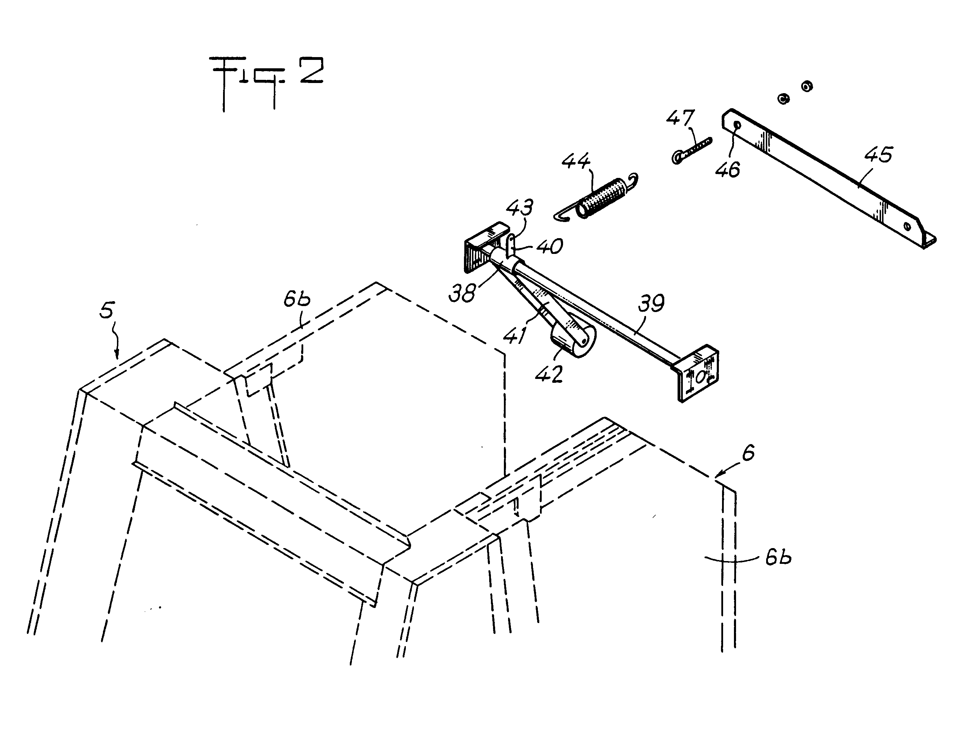

Comme on peut le voir sur les figures 1 et 2, la ramasseuse-enrouleuse comprend au moins un dispositif individuel de rétablissement de tension 36 associé à une des courroies juxtaposées 9 et formant une sorte de nappe tendue sans fin passant par les différents rouleaux 11 et 12. Ce dispositif de rétablissement de tension 36 est de préférence prévu au-dessus et entre les deux rouleaux de guidage fixes supérieurs 11 montés sur la partie supérieure de la porte à caisson arrière 6 et comporte un levier à deux bras 37 articulé, près de sa partie supérieure, par l'intermédiaire d'un manchon de pivotement 38, sur un axe transversal horizontal de support 39 fixé par ses extrémités sur la partie supérieure des flasques latéraux 6b de la porte 6. Ce levier à deux bras 37 présente un petit bras de levier supérieur 40 et un grand bras de levier inférieur 41 dont l'extrémité inférieure porte un rouleau de pression 42 dont la hauteur axiale correspond sensiblement à la largeur d'une courroie 9. Les deux bras de levier 40, 41 sont fixés rigidement sur le manchon de pivotement 38 et forment entre eux un angle qui est, par exemple, un angle droit ou quelque peu supérieur à celui-ci. Le manchon de pivotement 38 est maintenu en position axiale sur l'axe de support 39 et en face de la courroie correspondante 9, par exemple, au moyen d'anneaux de blocage non représentés. L'extrémité libre du petit bras de levier supérieur 40 comporte un trou d'accrochage 43 qui reçoit l'extrémité supérieure d'un ressort de rappel 44 dont l'autre extrémité est fixée sur une barre d'ancrage transversale 45 qui s'étend horizontalement et parallèlement à l'axe de support 39 et aux rouleaux 11, 12 et 42 et est montée sur les bords supérieurs des flasques latéraux 6b de la porte 6 au-dessus de la zone de déplacement du rouleau de pression 42. La barre d'ancrage 45 peut avoir la forme d'une cornière dont la face tournée vers le ressort de rappel 44 comporte des trous d'ancrage 46 en nombre égal à celui des courroies 9 et servant à la fixation de boulons d'ancrage 47 dont chacun est solidaire de l'extrémité inférieure d'un ressort de rappel 44 qui applique en permanence le rouleau de pression 42 contre la courroie correspondante 9 (voir figure 1) et la maintient tendue ou rétablit sa tension à une valeur déterminée par le ressort de rappel 44.

On comprend aisément que la ramasseuse-enrouleuse 1 peut être munie d'autant de dispositifs individuels de rétablissement de tension de courroie 36 qu'il y a de courroies 9. Selon un mode de réalisation économique, on ne prévoit des dispositifs de rétablissement de tension 36 qu'en face des deux courroies extrêmes latérales 9 qui travaillent dans des zones où l'alimentation en fourrage est parfois insuffisante.

Chaque dispositif individuel de rétablissement de tension 36 coopère avec un dispositif indicateur de position 48 qui affiche le franchissement par le rouleau de pression 42, à partir d'une position normale, d'une position limite correspondant à une tension individuelle encore acceptable de la courroie correspondante 9 et au début d'une alimentation insuffisante en fourrage de la zone de chambre de pressage 4 attribuée à la courroie 9 et au rouleau de pression 42 en question.

En vue de l'affichage du franchissement de la position limite à partir d'une position normale, le dispositif indicateur 48 comprend pour chaque dispositif de tension 36 un circuit électrique d'affichage dans lequel sont montés en série une source de courant continu 49, un voyant 50 et un interrupteur 51 maintenu ouvert par un ressort de pression 52. La source de courant continu 49 peut être constituée par l'accumulateur de la machine tractrice de la ramasseuse enrouleuse et le voyant 50 est de préférence incorporé au tableau de bord 53 de la machine tractrice de façon à informer le conducteur en permanence de l'état de tension de la courroie concernée 9. L'interrupteur 51 est par contre prévu sur la porte arrière 6, notamment sur une traverse 54 fixée sur les deux flasques latéraux 6b et de préférence au-dessus de l'axe de support 39 et à proximité du parcours du petit bras de levier 40 du dispositif de tension 36.

Comme précédemment mentionné, le contact 55 de l'interrupteur 51 est maintenu ouvert par un ressort de pression 52 et comporte un organe d'actionnement 56 tel qu'un poussoir avec lequel vient coopérer dans le sens de fermeture du contact 55 le petit bras de levier 40 ou un autre organe qui lui est solidaire dès que le rouleau de pression 42 franchit la position limite, à partir de sa position normale pour laquelle l'alimentation en fourrage de la zone concernée de la chambre de pressage 4 devient insuffisante. Ainsi, le circuit électrique du dispositif indicateur 48 est fermé et le voyant 50 s'allume et reste allumé jusqu'à ce que la zone concernée dans la chambre de pressage 4 soit à nouveau correctement alimentée par du fourrage par un déplacement approprié de la ramasseuse-enrouleuse.

Bien entendu, si l'on prévoit plusieurs dispositifs de rétablissement de tension 36, il y aura autant de dispositifs indicateurs 48 et on pourra alors contrôler aisément l'obtention d'une balle de fourrage à densité homogène. Dans ce cas, les voyants et interrupteurs correspondants 50, 51 seront montés dans autant de circuits électriques branchés en parallèle sur la source de tension continue 49.

Il se comprend de soi-même que l'invention n'est pas limitée aux modes de réalisation décrits mais englobe toute réalisation entrant dans la définition des revendications annexées.

## Revendications

1. Ramasseuse-enrouleuse de balles de fourrage cylindriques du type comprenant, sur un châssis de support (2) porté par une paire de roues(3), une chambre de pressage (4) délimitée par un caisson avant (5) fixé rigidement sur le châssis (2), par une porte à caisson arrière (6) montée à pivotement sur le caisson avant fixe de façon à pouvoir être basculée vers le haut et libérer la sortie de la balle (8), plusieurs courroies sans fin (9) qui sont juxtaposées parallèlement les unes aux autres et passent par dessus plusieurs rouleaux de renvoi dont certains (11) sont disposés à poste fixe à la périphérie de la chambre (4) et dont les autres (12) sont montés mobiles et font suivre auxdites courroies (9) la forme grandissante de la balle (8) en maintenant tendues les courroies passant sur la ou les parties de plus grand diamètre de la balle, au moins un dispositif indicateur (48) comportant un organe de commande (51) et un voyant (50) situé sur le tableau de bord (53) de la ramasseuse-enrouleuse, une ouverture d'accès (25) prévue à la partie inférieure de la chambre (4) et s'étendant sur toute la largeur de la ramasseuse-enrouleuse parallèlement à l'axe de la balle cylindrique (8), ainsi qu'un dispositif d'alimentation (26, 28, 30) qui ramasse le fourrage et le renvoie à l'intérieur de la chambre de pressage (4), caractérisée en ce qu'au moins une courroie (9) est associée à un dispositif individuel de rétablissement de tension de courroie (36) qui coopère avec le dispositif indicateur de position (48) le dispositif individuel de rétablissement de tension (36) comprenant un rouleau de pression (42) s'étendant sur sensiblement toute la largeur de la courroie considérée (9) et l'organe de commande (51) du dispositif indicateur (48) étant actionné par un élément suiveur (40) du rouleau (42) de façon à commander l'activation du voyant (50) pour n'importe quelle position de cet élément suiveur à partir d'une position limite pour laquelle l'alimentation en fourrage de la chambre de pressage (4) dans la section correspondant à la courroie (9) tendue par le rouleau (42) devient insufffisante.

2. Ramasseuse-enrouleuse selon la revendication 1, caractérisée en ce que chacune des courroies extrêmes latérales (9) est associée à un dispositif individuel de rétablissement de tension de courroie (36) et à un dispositif indicateur de position (48).

3. Ramasseuse-enrouleuse selon l'une des revendications 1 et 2, caractérisée en ce que chacune des courroies (9) est associée à un dispositif de rétablissement de tension (36) et à un dispositif indicateur (48) et tous les voyants (50) sont alignés sur le tableau de bord (53) du conducteur.

4. Ramasseuse-enrouleuse selon l'une des revendications 1 à 3, caractérisée en ce que le dispositif de rétablissement de tension (36) est prévu au-dessus et entre deux rouleaux de renvoi supérieurs fixes (11) et comporte un levier à deux bras (37) articulé à la jonction de ceux-ci, par l'intermédiaire d'un manchon de pivotement (38), sur un axe de support (39) fixé sur la partie supérieure des flasques latéraux (6b) de la porte (6) et que l'un (41) des bras (40, 41) porte à son extrémité libre, le rouleau de pression (42) appliqué contre une courroie correspondante sous l'action d'un ressort de rappel 44 fixé, d'une part, sur l'extrémité libre de l'autre bras (40) et d'autre part sur une barre d'ancrage transversale (45) solidaire desdits flasques latéraux 6b.

5. Ramasseuse-enrouleuse selon l'une des revendications 1 à 4, caractérisée en ce que chaque dispositif indicateur (48) comprend un circuit électrique d'affichage dans lequel sont montés en série une source de courant continu (49), un voyant (50) et un interrupteur 51 dont un contact 55 est maintenu ouvert par un ressort de pression 52 et coopère dans le sens de sa fermeture avec un organe solidaire du double levier 37 dès que le rouleau de pression (42) franchit la position limite, à partir de sa position normale pour laquelle l'alimentation en fourrage de la chambre de pressage (4) dans la section correspondant à la courroie (9) tendue par le rouleau (42) devient insuffisante.

## Claims

1. Pick-up baler for rolling cylindrical bales of crop material of the type comprising on a supporting chassis (2) carried by a pair of wheels (3), a pressing chamber (4) defined by a front housing (5) rigidly fixed on the chassis (2) by a rear door forming box (6), hingedly mounted on the front fixed housing in such a way as to be pivoted upwardly and to release the formed bale (8), a plurality of endless belts (9) which are juxtaposed in parallel and are looped over a plurality of return rollers, some of which (11) are fixedly mounted on the periphery of the chamber (4) while the others (12) are movably mounted and induce said belts (9) to follow the increasing shape of the bale (8) while keeping the belts passing over the part or parts of larger diameter of the bale, in stretched condition, at least one sensor device (48) including a control member (51) and an indicator (50) situated on the dashboard (53) of the pick-up baler, an inlet opening (25) provided at the lower part of the chamber (4) and extending throughout the width of the pick-up baler in parallel to the axis of the cylindrical bale (8), as well as a feeding device (26, 28, 30) which picks up the fodder and sends it inside the pressing chamber (4), characterized in that at least one belt (9) is associated to an individual tension restoring device (36) for the belt, which device cooperates with the position sensor (48), the individual tension restoring device (36) comprising a pressure roller (42) extending over substantially the whole width of the belt (9) and the control member (51) of the position sensor (48) being actuated by a lever arm (40) of the roller (42) so as to control the actuation of the indicator (50) for any position of said lever arm from a limit position in which the supply of crop material fed to the pressing chamber (4) in the section corresponding to the belt (9), stretched by the roller (42) is insufficient.

2. Pick-up baler according to claim 1, characterized in that each one of the lateral extreme belts (9) is associated to an individual belt tension restoring device (36) and to a position sensor (48).

3. Pick-up baler according to one of claims 1 and 2, characterized in that each one of the belts (9) associated to a belt tension restoring device (36) and to a position sensor (48) and all the indicators (50) are aligned on the dashboard (53) of the machine.

4. Pick-up baler according to one of claims 1 to 3, characterized in that said tension restoring device (36) is provided above and between two fixed upper guiding rollers (11) and comprises a lever (37) with two arms, which lever is articulated at the junction thereof via a pivot sleeve (38), on a support pin (39) fixed on the upper part of side plates (6b) of the door (6), and in that one (41) of the arms (40, 41) carries at its free end, the pressure roller (42) being applied against a corresponding belt under the action of a return spring (44), which is fixed, on the one hand, to the free end of the other arm (40) and on the other hand, on a transversal anchoring bar (45) fast with said side plate 6b.

5. Pick-up baler according to one of claims 1 to 4, characterized in that each position sensor (48) comprises an electric display circuit in which are mounted, in series, a d.c. source (49), an indicator (50) and a switch (51) one contact (55) of which is kept open by a pressure spring (52) and cooperates in its closing direction with a member integral with the two-arm lever (37) as soon as the pressure roller (42) shifts beyond the extreme position from its normal position for which the crop material supply to the pressing chamber (4) in the corresponding section of the belt (9) stretched by the roller (42) becomes sufficient.

## Patentansprüche

1. Ballenerntegerät zur Herstellung zylinderischer Erntegutballen, bestehend aus einem mit zwei Rädern (3) versehenen Fahrgestell (2); einer auf dem Fahrgestell (2) starr befestigten Vorderwandung (5), welche eine Rollenpreßkammer (4) begrenzt, eine schwenkbar gegenüber der Vorderwandung (5) lagernde rückwärtige Abgabetüre (6), welche beim Hochschwenken die Abgabe eines geschnürten Ballens (8) gestattet; ferner einer Mehrzahl von parallel zueinander angeordneten Endlosbändern (9), welche jeweils über mehrere Umlenkrollen geführt sind, von denen einige (11) im peripheren Bereich der Ballenpreßkammer (4) starr gelagert sind, während andere (12) beweglich gelagert sind und dabei bewirken, daß die Endlosbänder (9) dem Zunehmenden Durchmesser des Ballens (8) folgen, während sie gleichzeitig die den größten Teil des Durchmessers des Ballens (8) folgenden Bänder (9) gespannt halten; ferner wenigstens einer Positionsanzeige (48) mit einem Unterbrechungselement (51) und einer auf dem Armaturenbrett (53) des Erntegerätes angeordneten Anzeigelampe (50), einer im Unterbereich der Ballenpreßkammer (4) vorgesehenen Aufnahmeöffnung (25), welche sich parallel zur Längsachse des zylindrischen Ballens (8) über die ganze Breite des Ballenerntegerätes erstreckt, sowie einer Fördereinrichtung (26, 28, 30), mit welcher das Erntegut erfaßt und in das Innere der Rollenpreßkammer (4) gefördert wird, dadurch gekennzeichnet, daß wenigstens ein Endlosband (9) unter dem Einfluß einer mit der Positionsanzeige (48) in Verbindung stehenden Spanneinrichtung (36) steht, welche eine Andruckrolle (42) aufweist, die sich im wesentlichen über die gesamte Breite des jeweiligen Endlosbandes (9) erstreckt, wobei das Anzeigeelement (51) der Positionsanzeige (48) von einem Folgeelement (40) der Andruckrolle (42) derart betätigbar ist, daß bei Überschreitung einer beliebigen Position des Folgeelementes (40) eine Aktivierung der Anzeigelampe (50) erfolgt, sobald eine Position überschritten wird, bei der die Zufuhr des Erntegutes in die Rollenpreßkammer (4) in dem betreffenden Abschnitt des durch die Andruckrolle (42) gespannten Endlosbandes (9) nicht ausreichend ist.

2. Ballenerntegerät nach Anspruch 1, dadurch gekennzeichnet, daß eine Spanneinrichtung (36) sowie eine dazugehörige Positionsanzeige (48) jeweils den auf beiden Seiten befindlichen äußersten Endlosbändern (9) angeordnet sind.

3. Ballenerntegerät nach Anspruch 1 oder 2, dadurch gekennzeichnt, daß alle Endlosbänder (9) im Eingriffsbereich von entsprechenden Spanneinrichtungen (36) und Positionsanzeigen (48) stehen, und daß die entsprechenden Anzeigelampen (50) auf dem Armaturenbrett (53) des Fahrzeuglenkers nebeneinander angeordnet sind.

4. Ballenerntegerät nach einem der Ansprüche 1 bis 3, dadurch gekennzeichnet, daß die Spanneinrichung (36) im oberen Bereich zwischen zwei oberen starren Umlenkrollen (11) angeordnet ist, und dabei einen zweiarmigen Hebel (37) aufweist, welcher am Verbindungspunkt der beiden Hebelarme mittels eines Schwenklagers (38) auf einer Achse (39) gelagert ist, die im oberen Bereich der Seitenteile (6b) der Abgabetür (6) befestigt ist, wobei der eine Arm (41) diese Hebelarme (40, 41) an seinem freien Ende die Andruckrolle (42) trägt, welche unter dem Einfluß einer Zugfeder (44) gegen das betreffende Endlosband (9) gedrückt ist und wobei diese Zugfeder (44) mit dem einen Ende an dem anderen Arm (40) und mit dem anderen Ende an einer Befestigungsstange (45) eingehängt ist, die an den betreffenden Seitenteilen (6b) befestigt ist.

5. Ballenerntegerät nach einem der Ansprüche 1 bis 4, dadurch gekennzeichnet, daß die Positionsanzeige (48) einen elektrischen Anzeigekreis aufweist, innerhalb welchem eine Gleichstromquelle (49), eine Anzeigelampe (50) sowie ein Unterbrecherschalter (51) in Serie zueinander angeordnet sind, und daß der Unterbrecherschalter (51) ein Kontaktelement (55) aufweist, welches mittels einer Druckfeder (52) im abgehobenen Zustand gehalten ist, während es in Richtung eines Kontaktschlusses mit Hilfe eines Elementes des zweiarmigen Hebels (37) bewegbar ist, sobald die Andruckrolle (42) aus ihrer Normalposition eine Grenzposition überschreitet, in welcher die Zufuhr von Erntegut in die Ballenpreßkamnmer (4), und zwar in jenem Abschnitt, in welchem sich das durch die Andruckrolle (42) beaufschlagte Endlosband (9) befindet, nicht ausreichend ist.
